# EUROPÄISCHE PATENTANMELDUNG

(11) **EP 1 033 676 A1**
(43) Veröffentlichungstag der Anmeldung: **06.09.2000**
(21) Anmeldenummer: 00810114.9
(22) Anmeldetag: 10.02.2000
(51) Int. Cl.: G06K 19/077

(54) **Verfahren für die Herstellung eines Chipobjektes**

(30) Priorität: 04.03.1999 EP 99810190
(71) Anmelder: Sempac SA, 6330 Cham (CH)
(72) Erfinder: Truckenbrod, Willi, 6300 Zug (CH)
(74) Vertreter: Falk, Urs, Dr.

(57) **Zusammenfassung**

Die Erfindung betrifft ein Verfahren für die Herstellung eines Chipobjektes, das einen Körper (1) und ein Elektronikmodul (2) aufweist. Der Körper (1) des Chipobjektes wird vorzugsweise im Spritzgussverfahren hergestellt, wobei eine Vertiefung (6) und für die Fixierung des Elektronikmoduls (2) in der Vertiefung (6) geeignete Elemente geformt werden. Die Elemente bilden einen Schnappverschluss, in welchem das Elektronikmodul (2) beim Einsetzen in der Vertiefung (6) des Körpers (1) einrastet. Die Elemente haben die Form von freistehenden Zungen (7), die über die Vertiefung (6) vorstehen.

Das Verfahren ermöglicht die klebstofffreie Herstellung von Chipobjekten, insbesondere von Chipkarten.

## Beschreibung

Die Erfindung betrifft ein Verfahren für die Herstellung eines Chipobjektes der im Oberbegriff des Anspruchs 1 genannten Art.

Chipobjekte, insbesondere Chipkarten, bestehen im wesentlichen aus einem dünnen Körper und einem im Körper eingebetteten Elektronikmodul. Der Körper ist aus einer gepressten bzw. gegossenen oder laminierten Kunststoffmasse hergestellt, in welcher das Elektronikmodul eingeklebt und dadurch fixiert wird. Das Elektronikmodul besteht aus einem Halbleiterchip, der auf einem Systemträger angeordnet und im allgemeinen von einem eine Modulkapsel bildenden Kunststoff umgeben ist. Als Systemträger kommen dünne Metallstreifen oder flexible Leiterplatten, sogenannte Flextapes, in Frage.

Ein weiteres Beispiel für Chipobjekte sind sogenannte Tags. Tags sind Datenträger mit einem Chip, wobei der Datenaustausch kontaktlos erfolgt. Tags werden beispielsweise innerhalb einer Fabrik zur Kennzeichnung von Warenkörben verwendet, die Materialien oder Gegenstände von einem Ort zu einem anderen Ort transportieren. Tags werden in ähnlicher Weise wie Strichcodes verwendet, sind aber "intelligenter".

Flexible Leiterplatten umfassen im allgemeinen eine elektrisch nicht leitende Folie, beispielsweise aus Kunststoff oder Papier, welche ein- oder beidseitig mit einer elektrisch leitenden Schicht, im allgemeinen aus vergoldetem Kupfer, versehen ist. Der Halbleiterchip wird auf der Leiterplatte montiert und beispielsweise im Transfer-Mold Verfahren oder Globetop Verfahren mit der die Modulkapsel bildenden Kunststoffmasse umgeben. Anschliessend wird das Elektronikmodul ausgestanzt und in den eine Vertiefung aufweisenden, als Halbfabrikat vorbereiteten Körper der Chipkarte eingeklebt.

Das Klebeverfahren weist mehrere Nachrteile auf, von welchen insbesondere die Abhängigkeit der Viskosität der verwendbaren Klebstoffe von der Temperatur, die von Los zu Los schwankenden Eigenschaften der Klebstoffe, die nach Prozessunterbrüchen mit den Klebstoffen auftretenden Probleme und die benötigte Rauhigkeit der zu verklebenden Flächen genannt sein sollen. Bei der Fixierung des Elektronikmoduls in einem durch Laminierung hergestellten Körper können sich ausserdem gewisse vom Herstellungsprozess in oder am laminierten Körper vorhandene Stoffe wie beispielsweise Paraffin als Nachteil erweisen. Damit bei Klebeverfahren dennoch befriedigende Ergebnisse erzielt werden können, müssen aufwendige chemische und mechanische Reinigungs- und Aufrauhprozesse am Körper und am Elektronikmodul durchgeführt werden.

Um Elektronikmodule ohne Klebung im Chipobjekt zu fixieren, können sie in einem Formhohlraum mit einer zur Bildung des Körpers des Chipobjektes vorgesehenen Kunststoffmasse umspritzt werden. Für Elektronikmodule, die auf einem relativ starren Metallstreifen aufgebaut sind, sind solche Verfahren bekannt aus dem europäischen Patent EP 399 868 und aus der europäischen Patentanmeldung EP 599 194. Elektronikmodule, die auf einer flexiblen Leiterplatte basieren, müssen hingegen vor dem Umspritzen an einer Folie, beispielsweise einer Frontseitenetikette des Chipobjektes, fixiert werden.

Aus der europäischen Patentanmeldung EP 322 320 ist eine Chipkarte bekannt, bei der das Elektronikmodul unter vorstehenden Lappen im Kartenkörper fixiert ist. Die Lappen werden erst nach dem Einsetzen des Elektronikmoduls in den Kartenkörper entweder durch Auflaminieren einer Folienschicht oder durch Verformen eines an einem gespritzten Kartenkörper vorstehenden Nockens gebildet. Die letztere Variante hat den Nachteil, dass die Oberfläche der derart hergestellten Lappen nicht ausreichend plan zur Kartenoberfläche ist, so dass die Karte nicht mit zufriedenstellender Qualität bedruckt werden kann.

Aus der europäischen Patentanmeldung EP 623 897 ist ein Chipobjekt bekannt geworden, bei dem das Elektronikmodul in eine Vertiefung eingesetzt wird, deren Rand eine schräge Kante aufweist. Auch das Elektronikmodul muss mit einer dieser Kantenform angepassten schrägen Kante ausgebildet werden. Die Herstellung eines Kartenkörpers mit einer derartigen Vertiefung gestaltet sich aufwendig, da der gespritzte Kartenkörper gebogen werden muss, damit er von dem die Vertiefung bildenden Formteil losgelöst werden kann. Dementsprechend sind der Schräge der Kanten Grenzen gesetzt.

Aus der deutschen Patentanmeldung DE 196 46 717 ist eine Chipkarte bekannt, bei der das Elektronikmodul seitlich in den Kartenkörper eingeführt wird. Zur Fixierung des Elektronikmoduls sind Federzungen vorgesehen, in die meniskusförmig ausgebildete Innenkontakte des Elektronikmoduls eingreifen. Diese Lösung ist einerseits technisch sehr aufwendig. Nachteilig ist zudem, dass sich bei Chipkarten die Kontaktflächen nicht an der den gängigen Normen entsprechenden Lage befinden.

Der Erfindung liegt die Aufgabe zugrunde, ein einfaches Verfahren zur Herstellung eines Chipobjektes vorzuschlagen, bei dem ein Elektronikmodul ohne Verwendung von Klebstoff und ohne Verwendung einer Frontseitenetikette zum Chipobjekt verarbeitet werden kann.

Die genannte Aufgabe wird erfindungsgemäss gelöst durch die Merkmale des Anspruches 1.

Die Erfindung beruht auf dem Gedanken, zunächst den Körper des Chipobjektes mit einer Vertiefung und mit für die Fixierung des Elektronikmoduls in der Vertiefung geeigneten Elementen herzustellen, vorzugsweise im Spritzgussverfahren, und danach das Elektronikmodul in die Vertiefung im Körper einzusetzen, wobei das Elektronikmodul beim Einsetzen im Körper einrastet. Als Elemente für die Fixierung des Elektronikmoduls eignen sich über die Vertiefung vorstehende, freistehende Zungen, die eine Art elastischer Verschluss bilden. Das Elektronikmodul kann anschliessend mittels Ultraschallschweissen im Körper fixiert werden.

Nachfolgend werden Ausführungsbeispiele der Erfindung anhand der Zeichnung näher erläutert.

Es zeigen:
- Fig. 1: ein erstes Chipobjekt, das einen Körper und ein Elektronikmodul umfasst, vor dem Zusammenbau,
- Fig. 2: den Körper des ersten Chipobjektes in der Draufsicht,
- Fig. 3: den Körper eines zweiten Chipobjektes,
- Fig. 4A, B: ein drittes Chipobjekt vor und nach Zusammenbau,

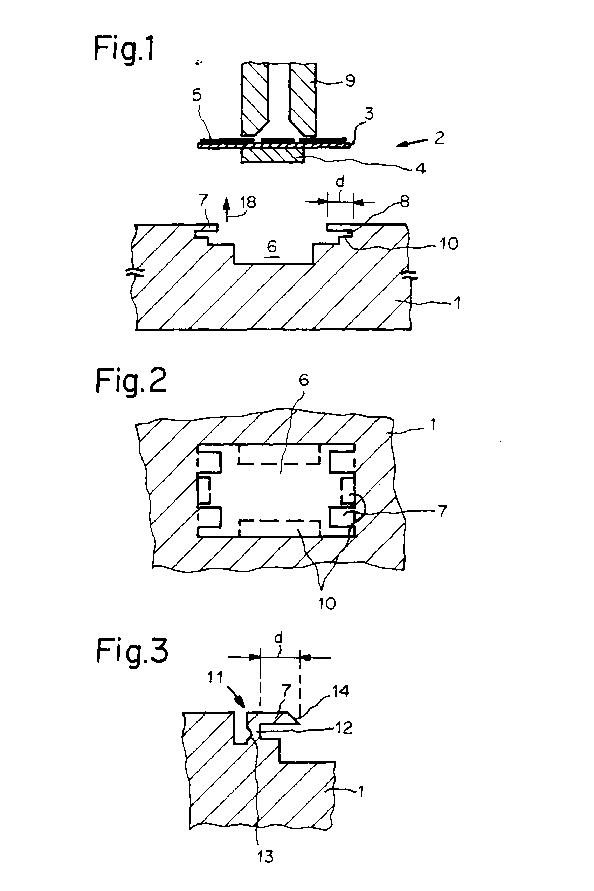

Die Fig. 1 zeigt in seitlicher Ansicht einen Körper 1 und ein Elektronikmodul 2 vor dem Zusammenfügen zu einem als Chipkarte dienenden Chipobjekt. Das Elektronikmodul 2 enthält einen Halbleiterchip, der auf einem Systemträger 3 montiert und im allgemeinen von einem eine Modulkapsel 4 bildenden Kunststoff umgeben ist. Die Modulkapsel 4 ist insbesondere ein im Transfer-Mold Verfahren hergestelltes Gehäuse. Als Systemträger 3 dient ein dünner Metallstreifen, ein sogenanntes Leadframe, oder eine Leiterplatte. Das Elektronikmodul 2 weist mehrere Kontaktflächen 5 auf, die elektrische Aussenkontakte des fertigen Chipobjektes bilden. Der aus einer Kunststoffmasse durch Spritzgiessen hergestellte Körper 1 weist eine Vertiefung 6 zur Aufnahme des Elektronikmoduls 2 auf. Der Rand der Vertiefung 6 ist mit in horizontaler Richtung über den Rand der Vertiefung 6 vorstehenden Zungen 7 ausgebildet. Die seitlichen Abmessungen der Vertiefung 6 und des Elektronikmoduls 2 sind so aufeinander abgestimmt, dass der Rand des Systemträgers 3 in die unter den Zungen 7 vorhandene Aussparung 8 zu liegen kommt, wobei die Zungen 7 den Rand des Elektronikmoduls 2 typischerweise um 0.1 bis 0.3 mm überlappen. Die Tiefe d der Aussparung 8 beträgt also ebenfalls 0.1 bis 0.3 mm, wenn das Elektronikmodul 2 spielfrei in der Vertiefung 6 plaziert werden soll.

Das Elektronikmodul 2 wird in herkömmlicher Technologie gefertigt und muss, bevor es im Körper 1 montiert werden kann, ausgestanzt werden. Die Montage des ausgestanzten Elektronikmoduls 2 im Körper 1 erfolgt, indem das von einem Stempel 9 aufgenommene und vorzugsweise mittels Vakuum gehaltene Elektronikmodul 2 in die Vertiefung 6 eingesetzt wird, wobei das Elektronikmodul 2 in der mittels der Zungen 7 gebildeten Aussparung 8 einrastet. Die Tiefe d der Aussparung 8 beträgt typischerweise 0.1 bis 0.3 mm.

Die Zungen 7 sind freistehend ausgebildet, damit sie sich gegen innen oder aussen biegen können. Dies ergibt die folgenden Vorteile: Das Loslösen des gespritzten Körpers 1 vom Formteil erfolgt ohne Probleme, da sich die Zungen 7 dann gegen aussen, d.h. in Richtung des Pfeils 18, biegen lassen. Umgekehrt können sich die Zungen 7 beim Einsetzen des Elektronikmoduls 2 gegen innen biegen. Vorteilhaft sind die Zungen 7, wie in der Fig. 2 gezeigt ist, an gegenüberliegenden Seiten der rechteckförmigen Vertiefung 6 angeordnet: Der Abstand zwischen einander gegenüberliegenden Zungen 7 wird temporär vergrössert und das Loslösen von der Form bzw. das Einsetzen des Elektronikmoduls 2 gestaltet sich einfacher, wenn der flache Körper 1 beim Loslösen von der Form bzw. beim Einsetzen des Elektronikmoduls 2 zusätzlich gebogen wird. Zudem kann beim Einsetzen auch das Elektronikmodul 2 gebogen werden.

Damit das eingesetzte Elektronikmodul 2 nicht in betrügerischer Absicht zerstörungsfrei aus dem Körper 1 herausgenommen werden kann, wird der Rand des Elektronikmoduls 2 beispielsweise durch Ultraschallschweissen im Körper 1 fixiert.

Im Zentralbereich ist die Vertiefung 6 vorteilhafterweise so tief ausgebildet, dass zwischen der Modulkapsel 4 und dem Körper 1 ein Zwischenraum verbleibt. Damit wird erreicht, dass der Körper 1 bei normalem Gebrauch der Chipkarte, wenn die Chipkarte etwas gebogen wird, keinen Druck auf die Modulkapsel 4 und den darin befindlichen Halbleiterchip ausübt.

Die Vertiefung 6 weist eine horizontale Fläche 10 auf, auf der die Unterseite des Systemträgers 3 des montierten Elektronikmoduls 2 aufliegt. Im Bereich der Zungen 7 ist die Fläche 10 bevorzugt sehr schmal ausgebildet oder fehlt dort sogar, damit das Elektronikmodul 2 beim Einsetzen im Körper 1 soweit hineingedrückt werden kann, dass der Randbereich des Systemträgers 3 etwas nach oben gebogen wird und somit an der Zunge 7 vorbeibewegt werden und einrasten kann. Im Bereich ausserhalb der Zungen 7 ist die Fläche 10, wie aus der Fig. 2 ersichtlich ist, die den Körper 1 in der Draufsicht zeigt, relativ breit und somit als grosse Auflagefläche für den Systemträger 3 des montierten Elektronikmoduls 2 ausgebildet.

Die Fig. 3 zeigt ein zweites Ausführungsbeispiel, bei dem der Körper 1 hinter jeder Zunge 7 mit einem Schlitz 11 versehen ist. Die Zunge 7 ist dann nur noch über einen Steg 12 mit dem Rest des Körpers 1 verbunden. Der Steg 12 weist bevorzugt noch eine Kerbe 13 auf, damit sich die Zunge 7 beim Einsetzen des Elektronikmoduls 2 ohne grossen Widerstand biegen lässt. Um das Einsetzen des Elektronikmoduls 2 noch weiter zu erleichtern, ist die Spitze der Zunge 7 zudem bevorzugt mit einer schrägen Kante 14 ausgebildet. Die durch den Schlitz 11 und die Kerbe 13 vergrösserte Flexibilität des Schnappverschlusses ermöglicht es, die Tiefe d der Aussparung 8 zu verlängern und dadurch die Fixierung des montierten Elektronikmoduls 2 zu verstärken.

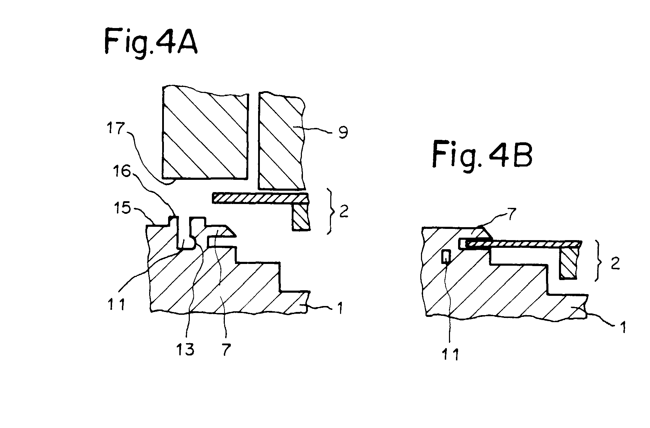

Die Fig. 4A und 4B zeigen ein drittes Ausführungsbeispiel des Chipobjektes vor und nach dem Zusammenbau von Elektronikmodul 2 und Körper 1, bei dem die Zungen 7 gegenüber der Oberfläche 15 der Körpers 1 überhöht sind. Zudem kann der Körper 1 auf der anderen Seite des Schlitzes 11 einen zusätzlichen Nocken 16 aufweisen. Die Montage des Elektronikmoduls 2 erfolgt hier mit einem Stempel 9, der eine heizbare Randfläche 17 aufweist. Nach dem Einrasten des Elektronikmoduls 2 heizt der Stempel 9 die Zunge 7 und den allenfalls vorhandenen Nocken 16 auf, bis sich die Zunge 7 und gegebenenfalls der Nocken 16 erweichen und verformen. Der Schlitz 11 wird dabei mindestens an der Oberfläche des Körpers 1 mit Plastikmaterial gefüllt, wobei die Oberfläche des Körpers 1 entweder plan ausgebildet wird oder einen kleinen Wulst aufweist.

Der Stempel 9 ist bevorzugt zweiteilig derart ausgebildet, dass die heizbare Randfläche 17 gegenüber dem mittleren Teil in vertikaler Richtung bewegbar ist.

Die Deformation der Zungen 7 und der allenfalls vorhandenen Nocken 16 durch Erwärmung führt möglicherweise zum Einbau mechanischer Spannungen, unter deren Einfluss sich der Körper 1 verformt oder verbiegt. Solche Effekte können vermindert werden, wenn die Zungen 7 bzw. Nocken 16 entweder ohnehin kleine Abmessungen aufweisen oder nur punktuell verformt werden.

Bei Chipkarten ist die Lage und Mindestgrösse der Kontaktflächen 5 durch Normen vorgegeben. Käufliche Elektronikmodule 2 unterscheiden sich hinsichtlich der Gesamtgrösse ihrer Kontaktflächen 5. Erst beim Ausstanzen aus dem Gurt bzw. Leadframe erhält das Elektronikmodul 2 seine endgültige Form. Bei optimaler Gestaltung des Designs des Körpers 1 der Chipkarte kann der Kartenkörper 1 problemlos mit Elektronikmodulen 2 unterschiedlicher Hersteller bestückt werden.

Falls die Kontaktflächen 5 (Fig. 1) des Elektronikmoduls 2, dessen Systemträger 3 eine flexible Leiterplatte ist, nicht bis zum Rand der Leiterplatte reichen, ist es möglich, die Zungen 7 des Kartenkörpers 1 so auszubilden, dass die Zungen 7 die Kontaktflächen 5 nicht berühren. Bei einem solchen Chipobjekt sind die Kontaktflächen 5 dann um die Dicke der Zungen 7 von typisch 40 µm weniger tief gegenüber der Oberfläche 15 des Chipobjektes abgesenkt.

## Patentansprüche

1. Verfahren für die Herstellung eines Chipobjektes, das einen flachen Körper (1) mit einer Oberseite und einer Unterseite und ein Elektronikmodul (2) aufweist, wobei das Elektronikmodul (2) in eine in der Oberseite des Körpers (1) angebrachten Vertiefung (6) eingebettet ist, **gekennzeichnet durch die folgenden Schritte:**
- Herstellung des Körpers (1), wobei die Oberseite des Körpers (1) mit freistehenden Zungen (7) versehen wird, die über die Vertiefung (6) vorstehen;
- Einsetzen des Elektronikmoduls (2) im Körper (1).

2. Verfahren nach Anspruch 1, **dadurch gekennzeichnet, dass** der Körper (1) durch Spritzgiessen hergestellt wird.

3. Verfahren nach Anspruch 1 oder 2, **dadurch gekennzeichnet, dass** das Elektronikmodul (2) im Körper (1) durch Ultraschallschweissen fixiert wird.
